# EUROPÄISCHE PATENTSCHRIFT

(11) **EP 3 329 535 B1**
(45) Veröffentlichungstag und Bekanntmachung des Hinweises auf die Patenterteilung: **08.01.2020**
(21) Anmeldenummer: 16741325.1
(22) Anmeldetag: 21.07.2016
(51) Int. Cl.: H01M 8/1004, H01M 8/1018, H01M 8/0273, H01M 8/2483

(54) **MEMBRAN-ELEKTRODEN-EINHEIT EINER BRENNSTOFFZELLE UND HERSTELLUNGSVERFAHREN**
MEMBRANE-ELEKTRODE UNIT OF A FUEL CELL AND A METHOD FOR THE MANUFACTURE THEREOF
L'UNITE MEMBRANE-ÉLECTRODE DE PILE À COMBUSTIBLE ET PROCÉDÉ DE FABRICATION DE CELUI-CI

(30) Priorität: 30.07.2015 DE 102015214520
(43) Veröffentlichungstag der Anmeldung: 06.06.2018
(73) Patentinhaber: Volkswagen AG, 38440 Wolfsburg (DE); AUDI AG, 85045 Ingolstadt (DE)
(72) Erfinder: ZILLICH, Christian Martin, 74613 Öhringen (DE)
(86) Internationale Anmeldenummer: PCT/EP2016/067431
(87) Internationale Veröffentlichungsnummer: WO 2017/016980

(56) Entgegenhaltungen:
- JP-A- 2006 331 655
- JP-A- 2006 331 655
- JP-A- 2008 034 251
- US-A1- 2010 075 187

## Beschreibung

Die Erfindung betrifft eine Membran-Elektroden-Einheit für eine Brennstoffzelle, sowie ein Verfahren zur Herstellung einer Membran für eine solche.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Einheit (MEA für *membrane electrode assembly*), die ein Gefüge aus einer ionenleitenden (meist protonenleitenden) Membran und jeweils einer beidseitig an der Membran angeordneten Elektrode (Anode und Kathode) ist. Zudem können Gasdiffusionslagen (GDL) beidseitig der Membran-Elektroden-Einheit an den der Membran abgewandten Seiten der Elektroden angeordnet sein. In der Regel wird die Brennstoffzelle durch eine Vielzahl im Stapel (*stack*) angeordneter MEA gebildet, deren elektrische Leistungen sich addieren. Zwischen den einzelnen Membran-Elektroden-Einheiten sind in der Regel Bipolarplatten (auch Flussfeldplatten genannt) angeordnet, welche eine Versorgung der Einzelzellen mit den Betriebsmedien, also den Reaktanten, sicherstellen und üblicherweise auch der Kühlung dienen. Zudem sorgen die Bipolarplatten für einen elektrisch leitfähigen Kontakt zu den Membran-Elektroden-Einheiten.

Im Betrieb der Brennstoffzelle wird der Brennstoff, insbesondere Wasserstoff H₂ oder ein wasserstoffhaltiges Gasgemisch, über ein anodenseitiges offenes Flussfeld der Bipolarplatte der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein (wassergebundener oder wasserfreier) Transport der Protonen H⁺ aus dem Anodenraum in den Kathodenraum. Die an der Anode bereitgestellten Elektronen werden über eine elektrische Leitung der Kathode zugeleitet. Der Kathode wird über ein kathodenseitiges offenes Flussfeld der Bipolarplatte Sauerstoff oder ein sauerstoffhaltiges Gasgemisch (zum Beispiel Luft) zugeführt, sodass eine Reduktion von O₂ zu O²⁻ unter Aufnahme der Elektronen stattfindet. Gleichzeitig reagieren im Kathodenraum die Sauerstoffanionen mit den über die Membran transportierten Protonen unter Bildung von Wasser. Derartige Brennstoffzellen sind beispielsweise aus JP 2006 331 655 A und US 2010/ 075 187 A1 bekannt. JP 2008-34251 A beschreibt eine MEA, die einen trapezförmigen Zuschnitt aufweist und an eine ebenfalls trapezförmige GDL angrenzt. Durch die so bewirkte Verengung des Strömungsfeldes soll eine verbesserte Abfuhr von Verunreinigungen erzielt werden.

Die Elektroden einer Brennstoffzelle liegen häufig als katalytische Beschichtung auf den Gasdiffusionslagen vor, die dann als Gasdiffusionselektroden bezeichnet werden, oder als katalytische Beschichtung auf der Membran. In letzterem Fall spricht man auch von katalytisch beschichteten Membranen oder CCM (für *catalytic coated membrane*). Es sind verschiedene Techniken bekannt, um zur Herstellung einer CCM ein Membranmaterial mit einem katalytischen Material zu beschichten und so die Katalysatorschichten zu erzeugen. Hierzu zählen Druckverfahren, Sprühverfahren, Abscheidungsverfahren, Aufstreichverfahren etc. Für die Massenherstellung sind preiswerte Verfahren mit hohen Produktionsraten wünschenswert.

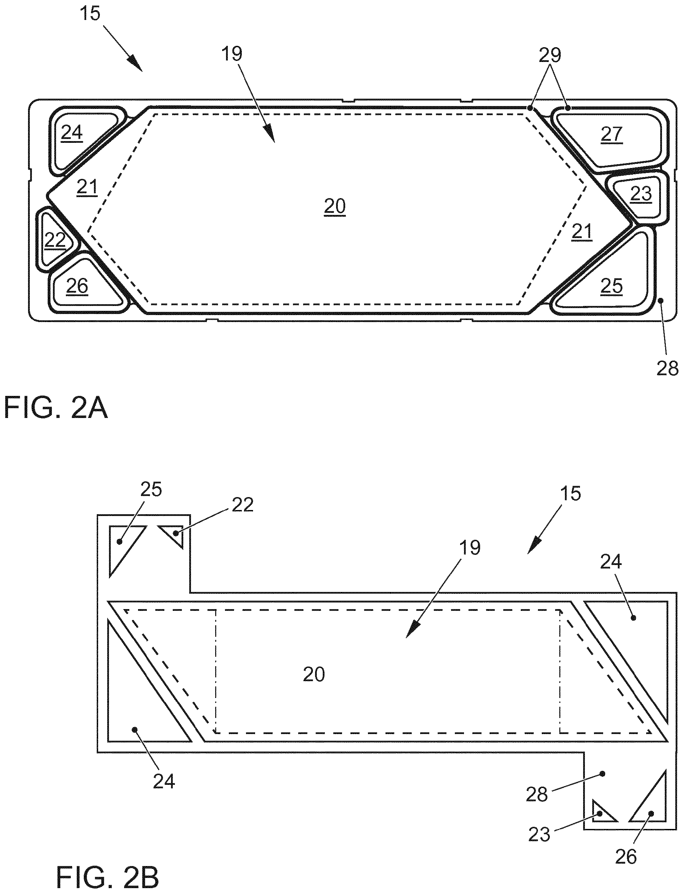

Derjenige Bereich einer MEA, der im Brennstoffzellenstapel mit beiden Reaktantengasen für die Anode und Kathode beaufschlagt wird und an dem die Brennstoffzellenreaktion unter Erzeugung von Elektrizität stattfindet, wird als aktiver Bereich bezeichnet. Der aktive Bereich nimmt jedoch nur einen Teil der Gesamtfläche der MEA ein. Die übrigen Bereiche, die eine variable Form aufweisen können, dienen der Zuführung und Verteilung der Betriebsmedien zu dem aktiven Bereich, der Abdichtung und der mechanischen Stabilisierung der MEA. Diese Bereiche werden als Verteilerbereiche bezeichnet und weisen überwiegend nicht aktive beziehungsweise inaktive Bereiche auf. In herkömmlichen Brennstoffzellen weist der aktive Bereich zumeist eine rechteckige Form auf. In dem Bestreben, eine hohe Flächenausnutzung für den aktiven Bereich zu erzielen, sind in jüngster Zeit auch Anordnungen mit nicht rechteckigen aktiven Bereichen entwickelt worden, beispielsweise mit einer regelmäßigen oder unregelmäßigen sechseckigen Kontur wie in Figur 2A gezeigt. Aus Kostengründen wünschenswert ist grundsätzlich, nur den aktiven Bereich mit der katalytischen Schicht auszustatten. Die selektive Beschichtung ausschließlich des aktiven Bereichs ist mit Druckverfahren, beispielsweise Offset- oder Siebdruck möglich. Diese Verfahren sind jedoch im Falle des Siebdrucks vergleichsweise langsam oder erfordern eine kostenintensive Maschinerie (Offsetdruck). Schneller und mit wenig Aufwand verbunden sind demgegenüber kontinuierliche Beschichtungsverfahren, bei denen das Membranmaterial kontinuierlich mit dem katalytischen Material beschichtet wird und die katalytisch beschichtete Membran später durch einen Konfektionsschritt ausgeschnitten wird. Nachteilig ist hier, dass im Falle nicht rechteckiger aktiver Bereiche die Beschichtung von inaktiven Bereichen der Membran oder des Membranverschnitts unvermeidlich ist. Sofern inaktive Bereiche unerwünscht mit katalytischem Material beschichtet werden, müssen diese Bereiche nachträglich beispielsweise durch Aufbringen von Diffusionsbarriereschichten blockiert werden. In jedem Fall bedeutet die überschüssige Beschichtung einen Verlust an katalytischem Material.

Gemäß EP 1 296 399 A1 wird eine katalytische Schicht auf eine Polymerelektrolytmembran durch kontinuierliches Aufsprühen einer Katalysatortinte erzeugt. Die Beschichtungsrichtung erstreckt sich hierbei orthogonal zu der späteren Hauptströmungsrichtung der Reaktantengase. Um eine Variation der Katalysatoreigenschaften, insbesondere der Katalysatorkonzentration in der Hauptströmungsrichtung zu erzielen, wird zur Herstellung ein Sprühwerkzeug eingesetzt, dessen Längsöffnung in zwei oder mehr Kompartimente unterteilt ist, mit denen gleichzeitig unterschiedliche Katalysatortinten aufgebracht werden können, die sich einander mit graduierender Schichtdicke überlagern.

Der Erfindung liegt nun die Aufgabe zugrunde, eine Membran-Elektroden-Einheit für eine Brennstoffzelle bereitzustellen, die eine gegenüber dem Stand der Technik erhöhte Leistungsdichte aufweist. Ferner soll ein Verfahren zur Herstellung einer Membran für eine solche definiert werden.

Diese Aufgabe wird durch eine Membran-Elektroden-Einheit sowie ein Verfahren mit den Merkmalen der unabhängigen Ansprüche gelöst.

Somit betrifft ein erster Aspekt der Erfindung eine Membran-Elektroden-Einheit einer Brennstoffzelle, umfassend eine Membran, die eine viereckige Form mit zwei parallelen Längsseiten und zwei einander gegenüberliegenden Kurzseiten aufweist. Erfindungsgemäß ist zumindest ein durch eine Kurzseite und die dazu benachbarten Längsseiten eingeschlossener Winkel von 90° verschieden, insbesondere im Bereich von 40 bis 80°, vorzugsweise im Bereich von 45 bis 65°. Beidseitig auf der Membran katalytische Beschichtungen angeordnet. Ferner umfasst die MEA eine Stützschicht, welche die Membran rahmenartig umschließt und welche an den zwei Kurzseiten der Membran jeweils drei Betriebsmittelports zur Zu- oder Abführung eines Anodenbetriebsgases, eines Kathodenbetriebsgases und eines Kühlmittels aufweist.

Vorliegend ist unter dem eingeschlossenen Winkel stets der kleinere von den Kurz- und Längsseiten eingeschlossene Winkel zu verstehen, auch wenn dieser nicht dem Innenwinkel des Vierecks entspricht. Die erfindungsgemäße MEA hat gegenüber bekannten MEA mit rechteckigen Membranen den Vorteil, dass sich innerhalb der MEA ein Teil der Membran in den Verteilerbereich erstreckt und somit die Leistungsdichte der Membran-Elektroden-Einheit, erhöht ist. Gegenüber Membranen, die eine prismatische, also im Wesentlichen sechseckige Form aufweisen, ist es bei der erfindungsgemäßen Membran möglich, dass die Herstellrichtung der Hauptrichtung der Membran entspricht. Damit ist der Materialverlust bei der Herstellung der erfindungsgemäßen Membran deutlich reduziert. Zudem weist die erfindungsgemäße Membran gegenüber bekannten prismatischen Membranen eine geometrisch simplere Form auf und gewährt dabei gleichzeitig deren Vorteile. Die erfindungsgemäße Membran ist derart ausgestaltet, dass vorteilhafter Weise die gesamte Membran zur Herstellung einer Membran-Elektroden-Einheit aktiviert werden kann, also mit einem katalytischen Material beschichtet werden kann. Damit sind die nutzbare aktive Fläche maximiert und die Leistungsdichte der späteren Membran-Elektroden-Einheit erhöht und damit eine Optimierung der Bauraumgröße des späteren Brennstoffzellenstapels erreicht.

In bevorzugter Ausgestaltung sind alle Innenwinkel des Vierecks der Membran von 90° verschieden. Somit kann die Membran die Form eines Trapezes oder eines Parallelogramms aufweisen. Der Vorteil dieser Ausgestaltung ist, dass die Membran individuell an die Bipolarplatte derart angepasst ist, dass sich ein Teil der Membran-Elektroden-Einheit in den Verteilerbereich erstreckt.

Weiterhin bevorzugt sind die gegenüberliegenden Kurzseiten parallel zueinander. Damit hat die erfindungsgemäße Membran dieser Ausgestaltung die Form eines Parallelogramms, wobei die jeweils gegenüberliegenden Winkel gleich groß sind. Weist die Membran die Form eines Parallelogramms, also eines regelmäßigen Rechtecks auf, so ist die Herstellung gegenüber unregelmäßigen geometrischen Formen vereinfacht.

Ein weiterer Aspekt der Erfindung ist ein Verfahren zur Herstellung einer Membran für die erfindungsgemäße MEA. Das erfindungsgemäße Verfahren umfasst die folgenden Schritte in der angegebenen Reihenfolge: Zunächst das Bereitstellen einer Endlosmembran, wobei die Kanten der Endlosmembran die Längsseiten der Membran ausbilden, sowie das Konfektionieren der Endlosmembran durch zwei geradlinige Schnitte. Dabei umfasst das Konfektionieren erfindungsgemäß einen ersten Schritt a), der in einem ersten Winkel α zur Erstreckungsrichtung ausgeführt wird und eine erste Schnittkante ergibt, sowie b) einen zweiten Schnitt, der in einem zweiten Winkel β zur Erstreckungsrichtung ausgeführt wird und eine zweite Schnittkante ergibt, wobei der erste Winkel α und/oder der zweite Winkel β von 90° verschieden sind. Vorzugsweise bilden die erste Schnittkante und die zweite Schnittkante die Kurzseiten der späteren Membran aus, wobei der erste und/oder der zweite Winkel α und/oder β erfindungsgemäß von 90° verschieden sind. Alternativ bilden die erste Schnittkante und die zweite Schnittkante die Längsseiten der späteren Membran aus. Die Membran wird vor oder nach der Konfektionierung vollflächig mit einem Katalysatormaterial beschichtet.

Das erfindungsgemäße Verfahren zeichnet sich insbesondere dadurch aus, dass die Kanten der Endlosmembran den späteren Längsseiten der Membran entsprechen. Dadurch ist sichergestellt, dass die Herstellrichtung der Membran der Hauptrichtung, insbesondere der Erstreckungsrichtung, der Membran entspricht. Zur Durchführung des erfindungsgemäßen Verfahrens sind keine Masken oder aufwendige Schnittmuster notwendig, da bei genauer Ausrichtung der Endlosmembran lediglich mindestens ein Schneidwerkzeug erforderlich ist, welches in einem definierten Schnittwinkel α zur Kante der Endlosmembran ausgerichtet ist. Vorzugsweise ist der Winkel des Werkzeugs zur Endlosmembran im Bereich von 0° bis 180° verstellbar. Somit stellt das erfindungsgemäße Verfahren ein besonders einfaches und reproduzierbares Herstellungsverfahren mit maximaler Ausbeute dar.

Bevorzugt wird bei der Herstellung die Endlosmembran kontinuierlich oder schrittweise gegen das mindestens eine Schneidwerkzeug bewegt. Die Membranlänge, also der Abstand zwischen den Schnittkanten, wird bei kontinuierlicher Fahrweise durch eine zeitliche Komponente, bei schrittweiser Fahrweise durch eine Förderlänge definiert.

Bei der Endlosmembran handelt es sich vorliegend um ein Membranmaterial in einem bandförmigen Zuschnitt mit zwei parallelen Längsseiten, welches insbesondere als Endlosband ausgebildet ist, das beispielsweise auf Rollen bevorratet und transportiert werden kann. Bei der Endlosmembran kann es sich um beschichtetes, insbesondere katalytisch beschichtetes, als auch um unbeschichtetes Membranmaterial handeln. Dabei ist das Membranmaterial vorzugsweise eine Polymerelektrolytmembran, wie beispielsweise Nafion.

In bevorzugter Ausgestaltung des erfindungsgemäßen Verfahrens ist vorgesehen, dass die Konfektionierung der Endlosmembran zur Herstellung weiterer Membranen wiederholt wird. Dabei werden mit n-facher Ausführung der zwei Schnitte jeweils n + 1 Membranen ausgebildet. Das heißt mit anderen Worten, dass der erste und der zweite Schnitt alternierend wiederholt werden. Dabei bilden 2n - 2 Schnitte jeweils die Schnittkanten zweier Membranen aus. Das heißt, beispielsweise bildet der erste Schnitt die erste Schnittkante einer ersten Membran, und der zweite Schnitt bildet die zweite Schnittkante der ersten Membran. Gleichzeitig bildet der zweite Schnitt die erste Schnittkante der folgenden zweiten Membran aus. Der dritte Schnitt wiederum bildet die zweite Schnittkante der zweiten Membran und gleichzeitig die erste Schnittkante einer weiteren, dritten Membran aus. Somit können mehrere Membranen in sequenzieller Prozessführung hergestellt werden, wobei kein Verschnitt an Membranmaterial zu verzeichnen ist.

Besonders bevorzugt sind dabei die Winkel α und β des ersten und zweiten Schnitts gleich groß. In dieser Ausgestaltung können die mehreren konfektionierten Membranen nach einem sequenziellen Konfektionierungsprozess ohne zusätzliche Zwischenschritte weiterverarbeitet werden. Darüber hinaus genügt ein Schneidwerkzeug, welches stets im gleichen Winkel zur Endlosmembran ausgerichtet ist.

Ferner ist bevorzugt, dass der erste Winkel α und der zweite Winkel β voneinander verschieden sind. Diese Ausgestaltung bietet den Vorteil, dass unter Umständen eine bessere Anpassung an die Bipolarplatte erfolgen kann. Diese Ausgestaltung zeichnet sich insbesondere durch eine optimierte Bauraumgeometrie und dadurch geringere Ansprüche an den Bauraum aus. In dieser Ausgestaltung ist bevorzugt, dass die zwei Schnitte mit Schneidwerkzeugen ausgeführt werden, die in unterschiedlichen Winkeln (α und β) zur Endlosmembran ausgerichtet sind und gleichzeitig oder nacheinander betätigt werden. Alternativ werden die zwei Schnitte auch bei unterschiedlichen Winkeln α und β mit nur einem Schneidwerkzeug durchgeführt, indem das Werkzeug zunächst den ersten Schnitt in einem Winkel α zur Endlosmembran durchführt, anschließend der Winkel des Schneidwerkzeugs zur Endlosmembran um die Differenz zwischen α und β verstellt wird und letztlich der zweite Schnitt im Winkel β zur Endlosmembran durchgeführt wird.

Insbesondere dann, wenn der Winkel α vom Winkel β verschieden ausgebildet ist, ist bevorzugt, dass die erste und zweite Schnittkante die Kurzseiten der Membran ausbilden und vor einer Weiterbehandlung der Membran eine zwischen dem zweiten Schnitt und dem ersten Schnitt herausgebildete Membran um 180° gedreht wird. Dabei ist die Drehachse in einem Mittelpunkt der Membran lotrecht zu ihrer Oberfläche angeordnet. Bei unterschiedlichen Schnittwinkeln α und β sind die bei einer sequenziellen Prozessierung in der beschriebenen Art ausgebildeten Membranen fortlaufend, aber bezogen auf die vorausfahrende Kurzseite alternierend angeordnet. Das heißt, dass bei der ersten Membran eine Kurzseite vorausläuft, welche mit den benachbarten Längsseiten jeweils den Winkel α einschließt, bei der folgenden Membran die Kurzseite vorausläuft, welche mit den benachbarten Längsseiten den Winkel β einschließt und so weiter. Um bei folgenden Prozessschritten, wie beispielsweise dem Anordnen der Membran in der Bipolarplatte, eine Gleichausrichtung zu gewährleisten, ist es daher vorteilhaft, jede zweite Membran, also jede zwischen dem zweiten Schnitt und dem ersten Schnitt herausgebildete Membran, derart zu drehen, dass die einzelnen Membranen, insbesondere in Längsrichtung, zueinander parallel verschoben ausgerichtet sind.

Zur Anordnung der erfindungsgemäßen Membran in einer Bipolarplatte wird die Membran vor oder nach der Konfektionierung vollflächig mit einem Katalysatormaterial beschichtet. Diese Beschichtung wird insbesondere in einer Mehrzahl an katalytisch beschichteten Membranen durch kontinuierliches Beschichten des Membranmaterials hergestellt, wobei die Außenseiten des aktiven Bereichs benachbarter katalytisch beschichteter Membranen parallel zueinander auf dem Membranmaterial angeordnet sind. Die Beschichtung konfektionierter Membranen bietet den Vorteil, dass Membran-Elektroden-Einheiten erzeugt werden können, welche einen aktiven Bereich aufweisen, der kleiner ist als die Membran und insbesondere rechteckig ausgebildet ist. Hierzu werden die Membranen beispielsweise quer zur Hauptströmungsrichtung beziehungsweise zur Herstellrichtung der Membranen hintereinander angeordnet und derart beschichtet, dass ein rechteckiger Bereich entsteht, dessen Länge durch einen Überlapp der Längsseiten definiert ist. Alternativ wird die gesamte Membranfläche mit katalytischem Material beschichtet. Hierzu ist besonders bevorzugt, dass bereits die Endlosmembran vor der Konfektionierung beschichtet ist.

Grundsätzlich kann für das Aufbringen des katalytischen Materials auf das Membranmaterial jedes bekannte Verfahren verwendet werden. Jedoch erlaubt es die Erfindung, auf selektive jedoch teure und langsame Druckverfahren zu verzichten. Vorzugsweise erfolgt das Aufbringen des katalytischen Materials durch Aufsprühen, Aufstreichen oder Aufrollen. Diese Techniken zeichnen sich dadurch aus, dass sie mit wenig Aufwand und hohen Produktionsraten umgesetzt werden können und zudem in Endlosrollenprozesse integriert werden können. Das katalytische Material wird dabei etwa in einem wässrigen oder nicht wässrigem Lösungsmittel als mehr oder weiniger viskose Paste oder als flüssige Suspension oder Lösung eingesetzt. Das Lösungsmittel wird nach dem Aufbringen und vor oder nach dem Konfektionieren durch aktive oder nicht aktive Trocknungsprozesse entfernt.

Die erfindungsgemäße Membran-Elektroden-Einheit umfasst die Membran, die nach dem erfindungsgemäßen Verfahren hergestellt oder herstellbar ist. Die Membran weist in der erfindungsgemäßen Membran-Elektroden-Einheit vorzugsweise beidseitig, insbesondere vollflächig eine aktive katalytische Beschichtung auf. Vorzugsweise umfasst sie ferner eine ein- oder beidseitig angeordnete Stützschicht, die rahmenartig die CCM und insbesondere die Betriebsmittelports umschließt und der mechanischen Stabilisierung dient. Optional können Dichtungen auf der Membran-Elektroden-Einheit angeordnet sein. Üblicherweise ist die bei der Herstellung angewandte Beschichtungsrichtung beispielsweise durch mikroskopische Untersuchungen der CCM nachweisbar. Ferner kann die Beschichtungsrichtung anhand der Randbereiche des Beschichtungsbereichs nachvollzogen werden.

Ferner betrifft die Erfindung einen Brennstoffzellenstapel, der eine Mehrzahl abwechselnd mit Bipolarplatten gestapelter Membran-Elektroden-Einheiten gemäß der Erfindung umfasst. Der Brennstoffzellenstapel kann insbesondere in einem Fahrzeug eingesetzt werden, das über einen elektromotorischen Antrieb verfügt, wobei der Brennstoffzellenstapel der Elektrizitätsversorgung des Elektromotors und/oder einer Traktionsbatterie dient.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Schnittansicht eines Brennstoffzellenstapels;
- Figur 2: Aufsicht auf eine Membran-Elektroden-Einheit nach dem Stand der Technik;
- Figur 3: eine schematische Prinzipskizze einer erfindungsgemäßen Membran in einer ersten Ausführungsform,
- Figur 4: eine schematische Schnittskizze der Durchführung des erfindungsgemäßen Verfahrens zur Herstellung der erfindungsgemäßen Membran in der ersten Ausführungsform,
- Figur 5: eine schematische Prinzipskizze einer erfindungsgemäßen Membran in einer zweiten Ausführungsform, und
- Figur 6: eine schematische Schnittskizze der Durchführung des erfindungsgemäßen Verfahrens zur Herstellung der erfindungsgemäßen Membran in der zweiten Ausführungsform.

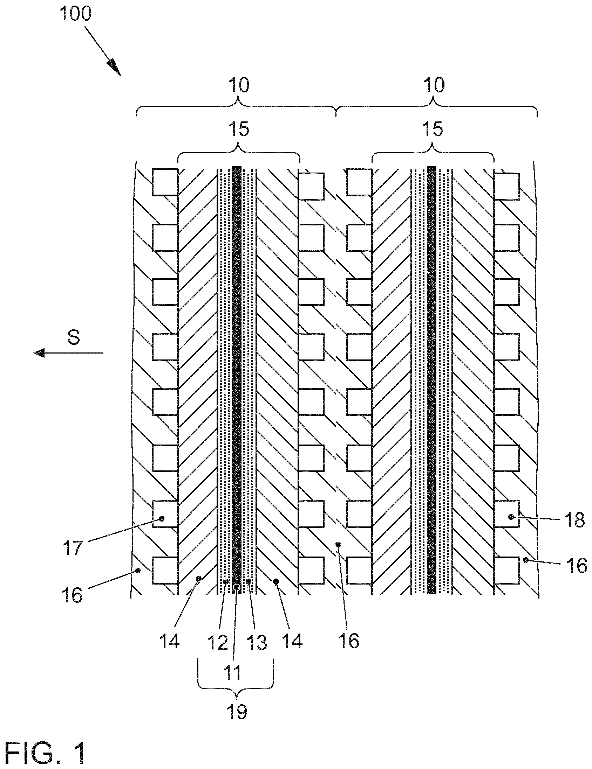

Figur 1 zeigt einen Ausschnitt aus einem insgesamt mit 100 bezeichneten Brennstoffzellenstapel, von dem hier lediglich zwei einzelne Brennstoffzellen 10 dargestellt sind.

Jede Brennstoffzelle 10 weist eine Polymerelektrolytmembran 11 auf, welche aus einem elektrolytisch leitfähigen Polymermaterial besteht, insbesondere protonenleitfähig ist. Typischerweise benötigt das Polymermaterial zur Aufrechterhaltung seiner elektrolytischen Leitfähigkeit eine gewisse Feuchtigkeit. An beiden Flachseiten der Membran 11 grenzt jeweils eine Katalysatorschicht an, nämlich eine anodische Katalysatorschicht 12 sowie eine kathodische Katalysatorschicht 13. Die Katalysatorschichten 12 und 13 umfassen ein katalytisches Material, bei dem es sich typischerweise um ein Edelmetall, insbesondere Platin, handelt. Üblicherweise umfassen die Katalysatorschichten 12, 13 ferner ein poröses, elektrisch leitfähiges Trägermaterial, auf dem das katalytische Material fein dispergiert vorliegt, beispielsweise ein kohlenstoffbasiertes Material. Die Katalysatorschichten 12, 13 können weitere Bestandteile umfassen, beispielsweise polymere Bindermaterialien und dergleichen mehr.

An jede Katalysatorschicht 12, 13 schließt jeweils eine Gasdiffusionslage (GDL) 14 an. Die GDL umfasst ein von Fluiden durchströmbares Material, das ebenfalls elektrisch leitfähig ist. Beispielsweise umfasst die GDL 14 ein kohlenstoffbasiertes Schaumstoff- oder Papiermaterial. Das Gefüge aus Membran 11, den Katalysatorschichten 12, 13 sowie den Gasdiffusionslagen 14 wird auch als Membran-Elektroden-Einheit 15 bezeichnet, wobei die Zuordnung der Gasdiffusionslagen 14 zu der Membran-Elektroden-Einheit 15 in der Literatur uneinheitlich ist.

Zwischen zwei Membran-Elektroden-Einheiten 15 ist jeweils eine Bipolarplatte 16, auch als Strömungsfeldplatte oder Flussfeldplatte bezeichnet, angeordnet. Die Bipolarplatte 16 weist auf ihrer Anodenseite Anodenströmungskanäle 17 auf, durch welche der anodischen Katalysatorschicht 12 ein Anodenbetriebsmittel (Brennstoff), insbesondere Wasserstoff, zugeführt wird. Ferner weist die Bipolarplatte 16 auf ihrer Kathodenseite Kathodenströmungskanäle 18 auf, durch welche der kathodischen Katalysatorschicht 13 ein Kathodenbetriebsgas zugeführt wird, bei dem es sich üblicherweise um ein sauerstoffhaltiges Gas, zumeist Luft, handelt. Üblicherweise weist die Bipolarplatte 16 ferner hier nicht dargestellte interne Kühlmittelkanäle auf, durch die ein Kühlmittel zur Kühlung des Brennstoffzellenstapels 100 geleitet werden kann. Die Bipolarplatte 16 ist aus einem elektrisch leitfähigen Material gefertigt, beispielsweise einem Metall, einer Metalllegierung, Graphit oder einem elektrisch leitfähigen Polymermaterial oder Polymerkompositmaterial. Die Bipolarplatte 16 vereinigt somit die Funktionen der Betriebsmittelversorgung, der Kühlung sowie der elektrischen Anbindung der katalytischen Elektroden 12, 13 an einen äußeren Stromkreis.

Üblicherweise ist eine Vielzahl derartiger Einzelzellen 10 in einem Brennstoffzellenstapel 100 angeordnet, deren elektrische Leistungen sich addieren. Für elektromobile Anwendungen umfassen Brennstoffzellenstapel 100 typischerweise mehrere hundert Einzelzellen 10.

Die Katalysatorschichten 12 und 13 können einerseits als Beschichtung auf der Membran 11 vorliegen. Man spricht in diesem Fall auch von einer katalytisch beschichteten Membran oder CCM (für *catalytic coated membrane*), die in Figur 1 insgesamt mit 19 bezeichnet ist. Alternativ können die Katalysatorschichten 12 und 13 als Beschichtung der Gasdiffusionslagen 14 vorliegen, sodass diese dann als Gasdiffusionselektroden bezeichnet werden. Die vorliegende Erfindung bezieht sich primär auf den Fall einer katalytisch beschichteten Membran 19 sowie ein Verfahren zu ihrer Herstellung.

Figur 2A zeigt eine Membran-Elektroden-Einheit 15 nach dem Stand der Technik in Aufsicht auf eine ihrer Flachseiten. Die Membran-Elektroden-Einheit 15 weist die katalytisch beschichtete Membran 19 auf. Im dargestellten Beispiel besitzt die katalytisch beschichtete Membran 19 eine sechseckförmige Kontur. Innerhalb dieser sechseckförmigen Kontur ist ein aktiver Bereich 20 angeordnet, welcher durch eine unterbrochene Linie angedeutet ist. Außerhalb des aktiven Bereichs 20 weist die katalytisch beschichtete Membran 19 inaktive Bereiche 21 auf. Der aktive Bereich 20 ist dadurch gekennzeichnet, dass im Einbauzustand der Membran-Elektroden-Einheit 15 in einen Brennstoffzellenstapel 100 in diesem Bereich die Brennstoffzellenreaktionen an der Anode und Kathode stattfinden und somit Elektrizität erzeugt wird. Die inaktiven Bereiche 21 dienen hingegen anderen Funktionen, beispielsweise der Zuführung der Betriebsmedien zu dem aktiven Bereich 20. Idealerweise ist die Polymerelektrolytmembran 11 lediglich im aktiven Bereich 20 mit den katalytische Beschichtungen 12 und 13 beschichtet.

Die Membran-Elektroden-Einheit 15 umfasst verschiedene Durchgangsöffnungen 22 bis 27, welche der Zu- und Abführung der verschiedenen Betriebsmedien dienen. So dient ein erster Anodenport 22 der Zuführung des Anodenbetriebsgases zu den Anoden 12 des Brennstoffzellenstapels 100 und ein gegenüberliegender zweiter Anodengasport 23 der Abführung des Anodenbetriebsgases. Desgleichen dient ein erster Kathodenport 24 der Zuführung eines Kathodenbetriebsgases an die Kathoden 13 des Brennstoffzellenstapels 100 und ein gegenüberliegender zweiter Kathodenport 25 der Abführung des Kathodenbetriebsgases. Schließlich dient ein erster Kühlmittelport 26 der Zuführung eines Kühlmittels zu den internen Kühlmittelkanälen der Bipolarplatten 16 und ein gegenüberliegender zweiter Kühlmittelport 27 der Abführung des Kühlmittels. Die im Einzelnen nicht dargestellten Bipolarplatten 16 weisen einen im Wesentlichen gleichen Zuschnitt wie die dargestellte Membran-Elektroden-Einheiten 15 auf, insbesondere korrespondierende Ports. Auf diese Weise werden im gestapelten Zustand der Membran-Elektroden-Einheiten 15 und Bipolarplatten 16 Betriebsmittelhauptkanäle ausgebildet, welche den Brennstoffzellenstapel 100 in seiner Stapelrichtung S (siehe Figur 1) durchsetzen. (Diese Betriebsmedienhauptkanäle sind in Figur 1 nicht dargestellt, welche lediglich einen Schnitt durch den aktiven Bereich 20 des Brennstoffzellenstapels zeigt.) Die Anoden- und Kathodenports 22 bis 25 sind über offene Verteilerkanäle der im Stapel 100 angrenzenden Bipolarplatten 16 mit den entsprechenden Anoden- beziehungsweise Kathodenkanälen 17, 18 der Bipolarplatten 16 fluidführend verbunden. Die Kühlmittelports 26, 27 sind mit den internen Kühlmittelkanälen der Bipolarplatten 16 verbunden. Die die Ports 22 bis 27 und den Anoden- beziehungsweise Kathodenkanälen 17, 18 des aktiven Bereich 20 verbindenden Verteilerkanalstrukturen verlaufen in den inaktiven Bereichen 21.

Zur mechanischen Abstützung ist die Membran 11 üblicherweise beidseitig von jeweils einer Stützschicht 28 eingefasst, welche die Membran 11 an ihren Randbereichen umschließt. Optional kann sich die Membran 11 auch über die gesamte Fläche der Membran-Elektroden-Einheit 15 erstrecken und an ihren Randbereichen mit Stützschichten 28 laminiert sein. Ferner sind in Figur 2A Dichtungen 29 erkennbar, welche die Betriebsmitteldurchgangsöffnungen 22 bis 27 sowie die katalytisch beschichtete Membran 19 einfassen, um diese nach außen abzudichten. Optional können die Dichtungen 29 statt auf der Membran-Elektroden-Einheit 15 auf den Bipolarplatten 16 oder auf beiden angeordnet sein.

Wie bereits ausgeführt, findet die Brennstoffzellenreaktion lediglich im aktiven Bereich 20 statt. Es wird daher angestrebt, möglichst nur in diesem Bereich die Katalysatorschichten 12 und 13 aufzubringen, da das katalytische Material mit Abstand die teuerste Einzelkomponente des Brennstoffzellenstapels darstellt. Auf der anderen Seite wird angestrebt, den aktiven Bereich 20 möglichst groß und die inaktiven Bereiche 21 möglichst klein zu gestalten, um eine möglichst hohe Energieausbeute zu erzielen beziehungsweise den erforderlichen Bauraum und das Gewicht der Brennstoffzelle zu minimieren. Diesem Bestreben entsprechend resultieren Konturen des aktiven Bereichs 20, die von der herkömmlichen rechteckigen Kontur (wie in Figur 2A gezeigt) abweichen können und eine unregelmäßige Kontur aufweisen.

Die kostengünstige und zeitsparende Massenherstellung katalytisch beschichteter Membranen 19 mit einem nicht rechteckigen aktiven Bereich ist bisher nur unzufrieden gelöst. Beispielsweise kann die Herstellung durch selektive Beschichtungsverfahren erfolgen, bei denen das katalytische Material ausschließlich auf den aktiven Bereich 20 eines Membranmaterials aufgebracht wird, beispielsweise durch selektive Druckverfahren wie Siebdruck oder Offsetdruck. Diese Verfahren sind jedoch durch eine langsame Produktionsgeschwindigkeit (Siebdruck) oder durch kostenintensive Maschinen (Offsetdruck) gekennzeichnet. Schneller und kosteneffizienter sind auf der anderen Seite kontinuierliche Beschichtungsverfahren, bei denen das katalytische Material unter Erzeugung einer konstanten Beschichtungsbreite auf das Membranmaterial aufgebracht wird.

Figur 2B zeigt eine erfindungsgemäße Membran-Elektroden-Einheit. Der Grundaufbau der erfindungsgemäßen Membran-Elektroden-Einheit entspricht im Wesentlichen der in Figur 2A gezeigten. Der Unterschied besteht in der Form der Membran 30 und der Elektroden. Vorliegend weist die Membran eine viereckige Form mit zwei parallelen Längsseiten auf. Die Kurzseiten stehen in einem Winkel zu den Längsseiten, der von 90° verschieden ist. In Figur 2B weist die Membran die Form eines Parallelogramms auf.

Im Verteilerbereich sind die Betriebsmittelhauptports angeordnet, dabei liegt der Kathodenhautport fluchtend in Verlängerung des aktiven Bereichs. Der Kühlmittelhauptport und der Anodenhauptport sind im Verteilerbereich seitlich von der Membran angeordnet.

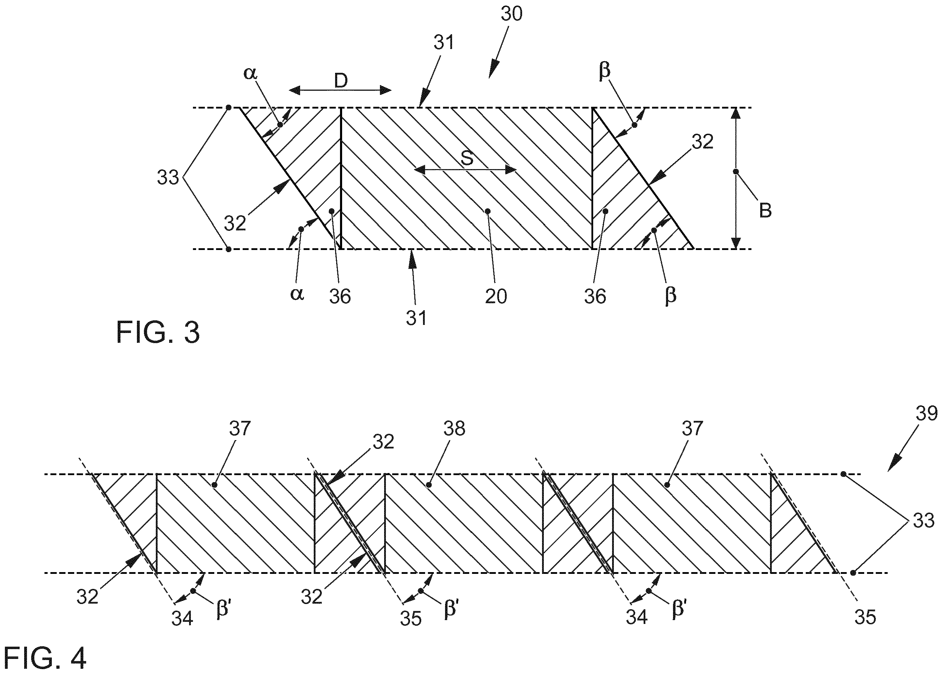

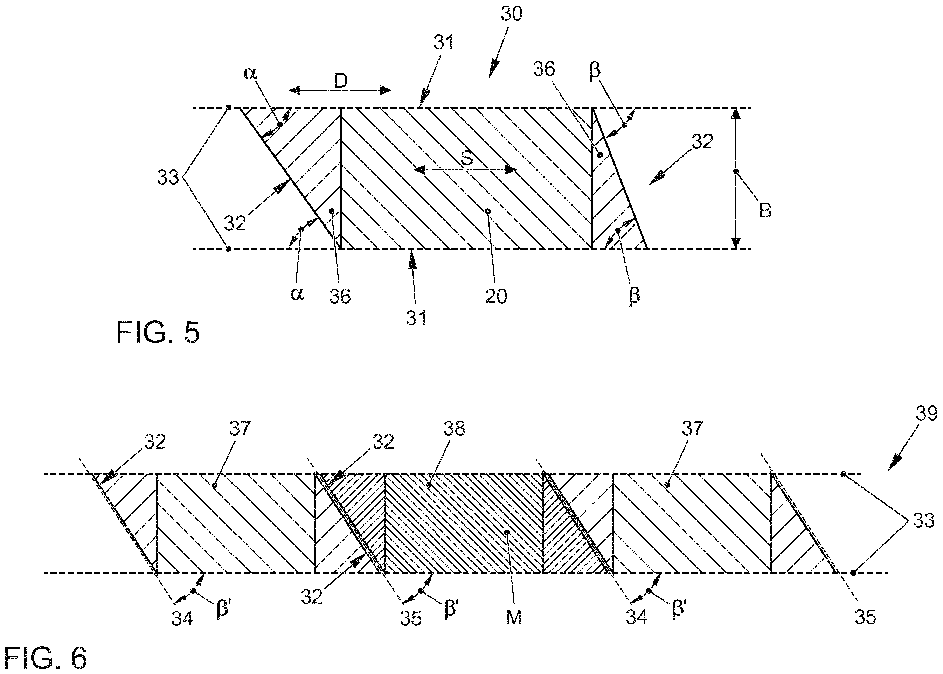

Figur 3 und 5 zeigen je eine schematische Prinzipskizze der erfindungsgemäßen Membran 30 in einer ersten und zweiten Ausführungsform. Gezeigt ist jeweils eine Membran 30 in viereckiger Form. Die Längsseiten 31 der Membran 30 sind parallel zueinander angeordnet. Der Abstand der Längsseiten 31 zueinander definiert die Breite B der Membran 30. Die Membran 30 zeichnet sich dadurch aus, dass die Erstreckungsrichtung S der Membran 30 der Herstellrichtung D entspricht. Das heißt, die Längsseiten 31 sind zumindest parallel zu einer Erstreckungsrichtung des Ausgangsmaterials, wie beispielsweise einer Endlosmembran. Vorzugsweise entspricht die Breite B der Membran 30 der Breite des Ausgangsmaterials, sodass die Längsseiten 31 mit den Kanten 33 des Ausgangsmaterials, respektive der Endlosmembran, zusammenfallen.

Neben den zwei Längsseiten 31 ist die Struktur der Membran durch zwei Kurzseiten 32 definiert. Die Kurzseiten sind an den beiden gegenüberliegenden Enden einer Längsseite 31 angeordnet und verbinden jeweils die Enden der gegenüberliegenden Längsseiten 31 miteinander. Jede Längsseite 31 schließt mit beiden Kurzseiten 32 je einen Winkel α, β ein, wobei vorliegend stets der kleinere Winkel gemeint ist, welcher nicht zwingend einem Innenwinkel des Vierecks entspricht. Erfindungsgemäß ist zumindest einer der Winkel α oder β von 90° verschieden. Die Winkel α und β können gleich sein (Figur 3) oder sich voneinander unterscheiden (Figur 5).

Die Membran 30 kann in zwei Bereiche unterteilt werden, einen aktiven Bereich 20 und einen Verteilerbereich 36. Diese Bereiche 20, 36 werden bei einer Funktionalisierung der Membran 30 durch katalytische Beschichtung beziehungsweise partielle Inaktivierung einer katalytischen Beschichtung, ausgebildet. Dabei weist der aktive Bereich 20 stets eine aktive katalytische Beschichtung auf. Der Verteilerbereich 36 der Membran 30 kann einen aktivierbaren Bereich aufweisen, der in der erfindungsgemäßen Membran 30 dem gesamten Verteilerbereich 36 entspricht, da er in der erfindungsgemäßen Form der Membran 30 ebenfalls vollständig aktiviert sein kann, also eine aktive katalytische Beschichtung aufweisen kann.

Bei der Verwendung der erfindungsgemäßen Membran 30 in einer Brennstoffzelle, ist die Membran 30 derart zwischen zwei Bipolarplatten angeordnet, dass der aktive Bereich 20 im aktiven Bereich der Brennstoffzelle angeordnet ist, in dem Strömungskanäle eines Brennstoffs und eines Oxidationsmittels gleichermaßen vorliegen und vorzugsweise parallel zueinander verlaufen. Der Verteilerbereich 36 hingegen ist im Verteilerbereich der Brennstoffzelle angeordnet, in dem die Strömungskanäle dem aktiven Bereich zugeführt werden. Je nach Ausgestaltung der verwendeten Bipolarplatten können sich auch im Verteilerbereich der Bipolarplatten die Strömungskanäle von Oxidationsmittel und Brennstoff überlagern. Dieser Bereich entspricht idealerweise dem Verteilerbereich 36 der erfindungsgemäßen Membran 30. In dieser Ausgestaltung ist der Verteilerbereich 36 vorzugsweise aktiviert, weist die Membran 30 also vollflächig eine aktive katalytische Beschichtung auf.

Die Figuren 4 und 6 zeigen eine schematische Schnittskizze bei der Herstellung der erfindungsgemäßen Membranen 30 nach der ersten (Figur 4) oder zweiten (Figur 6) Ausführungsform.

Gezeigt ist eine Endlosmembran 39, aus der mit dem erfindungsgemäßen Verfahren durch die Wiederholung von zwei Schnitten 34, 35 mehrere der erfindungsgemäßen Membranen 30 ausgebildet werden. Um eine erfindungsgemäße Membran 30 herzustellen, wird die Endlosmembran 39 mit zwei Schnitten, einem ersten Schnitt und einem zweiten Schnitt geschnitten. Die Schnitte können nacheinander oder gleichzeitig mit demselben oder verschiedenen Werkzeugen ausgeführt werden. Die zwei Schnitte können in Abhängigkeit von einer Länge der Endlosmembran 39 beliebig um ein n-Faches wiederholt werden, wobei n+1 Membranen 30 ausgebildet werden.

Die entstehenden Schnittkanten der Endlosmembran 39 bilden jeweils die Kurzseiten der Membran 30. Dabei werden mit Ausnahme des ersten und des letzten Schnitts innerhalb eines Verfahrens durch jeden Schnitt zwei Kurzseiten von je zwei Membranen 30 generiert. Zwischen je zwei entstehenden Schnittkanten 34 und 35 entsteht jeweils eine m-te Membran und zwischen zwei Schnittkanten 35 und 34 entsteht jeweils eine m+1-te Membran 30.

Die entstehende erste Schnittkante 34 weist zu den Kanten 33 der Endlosmembran einen Winkel α' auf, der dem Winkel α der erfindungsgemäßen Membran 30 entspricht. Entsprechend weist die entstehende zweite Schnittkannte 35 zu den Kanten 33 der Endlosmembran einen Winkel β' auf, der dem Winkel β entspricht. Zumindest ein Winkel α' und/oder β' ist erfindungsgemäß von 90°verschieden.

Die beiden Winkel α' und β' können gleich sein, wie in Figur 4 gezeigt, oder voneinander verschieden, wie in Figur 6 gezeigt. Sind die Winkel α' und β' gleich, so sind alle generierten Membranen 30 gleich ausgerichtet. Unterscheiden sich die Winkel α' und β', wie in der Ausführungsform der Figur 6, so ist jede zweite, also jeweils eine m+1-te Membran 38 gegenläufig zur vorauslaufenden und nachlaufenden Membran 37 ausgerichtet. Das heißt, während bei der m-ten Membran 37 die Kurzseite mit dem Winkel α vorausläuft, ist die m+1-te Membran 38 derart ausgerichtet, dass die Kurzseite mit dem Winkel β vorausläuft. Um weiterführende Prozessschritte zu vereinfachen, wird in derartigen Fällen vorgeschlagen, die m+1-te Membran 38 bezogen auf eine Drehachse durch den Mittelpunkt M der Membran 38 um 180° zu drehen.

Das erfindungsgemäße Verfahren ist demnach geeignet, in sequentieller Weise Membranen 30 ohne Verschnitt aus einer Endlosmembran 39 herzustellen, unabhängig davon, ob sich die durch die Kurzseiten 32 und Längsseiten 31 eingeschlossenen Winkel α und β voneinander unterscheiden.

### Bezugszeichenliste

- 100: Brennstoffzellenstapel

- 10: Brennstoffzelle (Einzelzelle)
- 11: Polymerelektrolytmembran
- 12: anodische Katalysatorschicht / Anode
- 13: kathodische Katalysatorschicht / Kathode
- 14: Gasdiffusionslage
- 15: Membran-Elektroden-Einheit
- 15': Membran-Elektroden-Einheit nach dem Stand der Technik
- 16: Bipolarplatte
- 17: Anodenströmungskanäle
- 18: Kathodenströmungskanäle
- 19: katalytisch beschichtete Membran

- 20: aktiver Bereich
- 21: inaktiver Bereich
- 22: erster Anodenport
- 23: zweiter Anodenport
- 24: erster Kathodenport
- 25: zweiter Kathodenport
- 26: erster Kühlmittelport
- 27: zweiter Kühlmittelport
- 28: Stützschicht
- 29: Dichtung

- 30: Membran
- 31: Längsseite
- 32: Kurzseite
- 33: Kanten der Endlosmembran
- 34: erste Schnittkante/ erster Schnitt
- 35: zweite Schnittkante/ zweiter Schnitt
- 36: Verteilerbereich
- 37: m-te Membran
- 38: m+1-te Membran
- 39: Endlosmembran

- α: erster Winkel
- β: zweiter Winkel

- B: Beschichtungsbreite
- D: Herstellungsrichtung der Membran-Elektroden-Einheit
- S: Hauptrichtung der Membran-Elektroden-Einheit
- M: Mittelpunkt der Membran-Elektroden-Einheit

## Patentansprüche

1. Membran-Elektroden-Einheit (15) für eine Brennstoffzelle, umfassend:
- eine Membran (30) aufweisend eine viereckige Form mit zwei parallelen Längsseiten (38) und zwei einander gegenüberliegenden Kurzseiten (32), wobei zumindest ein durch eine Kurzseite (32) und durch eine dazu benachbarte Längsseite (31) eingeschlossener Winkel (α) von 90° verschieden ist,
- beidseitig auf der Membran (3) angeordnete katalytische Beschichtungen (12, 13) und
- zumindest eine Stützschicht (28), welche die Membran (30) rahmenartig umschließt und welche an den zwei Kurzseiten (32) der Membran (30) jeweils drei Betriebsmittelports (22-27) zur Zu- oder Abführung eines Anodenbetriebsgases, eines Kathodenbetriebsgases und eines Kühlmittels aufweist.

2. Membran-Elektroden-Einheit (15) nach Anspruch 1, **dadurch gekennzeichnet, dass** alle Innenwinkel des Vierecks von 90° verschieden sind.

3. Membran-Elektroden-Einheit (15) nach einem der vorhergehenden Ansprüche, **dadurch gekennzeichnet, dass** die gegenüberliegenden Kurzseiten (32) parallel zueinander angeordnet sind.

4. Membran-Elektroden-Einheit (15) nach einem der Ansprüche 1 oder 3, **dadurch gekennzeichnet, dass** die gegenüberliegenden Kurzseiten (32) nicht parallel zueinander angeordnet sind.

5. Membran-Elektroden-Einheit nach einem der vorhergehenden Ansprüche, **dadurch gekennzeichnet, dass** die Membran (30) vollflächig die katalytischen Beschichtungen (12, 13) aufweist.

6. Verfahren zum Herstellen einer Membran (30) für eine Membran-Elektroden-Einheit (15) nach einem der vorhergehenden Ansprüche umfassend die folgenden Schritte in der angegebenen Reihenfolge:
- Bereitstellen einer Endlosmembran (39), wobei die Kanten der Endlosmembran (39) Längsseiten der Membran (30) ausbilden,
- Konfektionieren der Endlosmembran (39) durch zwei gerade Schnitte, umfassend
a.) einen ersten Schnitt, der in einem ersten Winkel (a) zur Erstreckungsrichtung ausgeführt wird und eine erste Schnittkannte (34) ausbildet, und
b.) einen zweiten Schnitt, der in einem zweiten Winkel (β) zur Erstreckungsrichtung ausgeführt wird und eine zweite Schnittkante (35) ausbildet,
wobei der erste Winkel α und/oder der zweite Winkel β von 90° verschieden sind, und
- wobei die Membran (30) vor oder nach der Konfektionierung vollflächig mit einem Katalysatormaterial beschichtet wird.

7. Verfahren nach Anspruch 6, **dadurch gekennzeichnet, dass** die Konfektionierung der Endlosmembran (39) zur Herstellung weiterer Membranen (30) wiederholt wird, wobei mit n-facher Ausführung der zwei Schnitte jeweils n+1 Membranen ausgebildet werden.

8. Verfahren nach einem der Ansprüche 6 oder 7, **dadurch gekennzeichnet, dass** der erste Winkel (α) und der zweite Winkel (β) voneinander verschieden sind.

9. Verfahren nach Anspruch 8, **dadurch gekennzeichnet, dass** die erste und zweite Schnittkante die Kurzseiten der Membran ausbilden und eine zwischen dem zweiten Schnitt (35) und dem ersten Schnitt (34) herausgebildete Membran (38) vor einer Weiterverarbeitung um 180° gedreht wird, wobei die Drehachse in einer Membranebene lotrecht zur Oberfläche der Membran (38) angeordnet ist.

## Claims

1. Membrane-electrode unit (15) for a fuel cell, comprising:
- a membrane (30) having a rectangular shape having two parallel longitudinal sides (38) and two short sides (32) opposite one another, wherein at least one angle (α) subtended by a short side (32) and by a longitudinal side (31) adjacent thereto is different from 90°,
- catalytic coatings (12, 13) disposed on both sides of the membrane (3) and
- at least one support layer (28) which encloses the membrane (30) in the manner of a frame and which has on the two short sides (32) of the membrane (30) in each case three operating means ports (22-27) for the supply or discharge of an anode operating gas, a cathode operating gas and a cooling agent.

2. Membrane-electrode unit (15) according to claim 1, **characterised in that** all interior angles of the rectangle are different from 90°.

3. Membrane-electrode unit (15) according to any of the preceding claims, **characterised in that** the oppositely-situated short sides (32) are disposed parallel to one another.

4. Membrane-electrode unit (15) according to any of claims 1 or 3, **characterised in that** the oppositely-situated short sides (32) are not disposed parallel to one another.

5. Membrane-electrode unit according to any of the preceding claims, **characterised in that** the membrane (30) has the catalytic coatings (12, 13) over its entire surface.

6. Method for manufacturing a membrane (30) for a membrane-electrode unit (15) according to any of the preceding claims comprising the following steps in the given sequence:
- provision of an endless membrane (39), wherein the edges of the endless membrane (39) form longitudinal sides of the membrane (30),
- tailoring the endless membrane (39) using two straight cuts, comprising
a) a first cut which is carried out at a first angle (α) to the extension direction and forms a first cutting edge (34), and
b) a second cut which is carried out at a second angle (β) to the extension direction and forms a second cutting edge (35),
wherein the first angle α and/or the second angle β are different from 90°, and
- wherein the membrane (30) prior to or after the tailoring is coated over its entire surface with a catalytic material.

7. Method according to claim 6, **characterised in that** the tailoring of the endless membrane (39) is repeated for the manufacture of further membranes (30), wherein with n-fold execution of the two cuts in each case n+1 membranes are formed.

8. Method according to any of claims 6 or 7, **characterised in that** the first angle (α) and the second angle (β) are different from one another.

9. Method according to claim 8, **characterised in that** the first and second cut edge form the short sides of the membrane and a membrane (38) formed between the second cut (35) and the first cut (34) is turned about 180° prior to a further processing, wherein the rotational axis is disposed in a membrane plane normal to the surface of the membrane (38).

## Revendications

1. Unité membrane-électrode (15) pour une pile à combustible, comprenant :
- une membrane (30) présentant une forme de quadrilatère avec deux côtés longitudinaux (38) parallèles et deux côtés courts (32) se faisant face, dans laquelle au moins un angle (α) formé par un côté court (32) et par un côté long (31) adjacent à celui-ci est différent de 90°,
- des revêtements (12, 13) catalytiques disposés de part et d'autre sur la membrane (3), et
- au moins une couche de protection (28), laquelle entoure à la manière d'un cadre la membrane (30) et laquelle présente au niveau des deux côtés courts (32) de la membrane (30) respectivement trois ports de moyen de fonctionnement (22-27) servant à amener ou évacuer un gaz de fonctionnement d'anode, un gaz de fonctionnement de cathode et un liquide de refroidissement.

2. Unité membrane-électrode (15) selon la revendication 1, **caractérisée en ce que** tous les angles intérieurs du quadrilatère sont différents de 90°.

3. Unité membrane-électrode (15) selon l'une quelconque des revendications précédentes, **caractérisée en ce que** les côtés courts (32) se faisant face sont disposés de manière parallèle l'un par rapport à l'autre.

4. Unité membrane-électrode (15) selon l'une quelconque des revendications 1 ou 3, **caractérisée en ce que** les côtés courts (32) se faisant face ne sont pas disposés de manière parallèle l'un par rapport à l'autre.

5. Unité membrane-électrode selon l'une quelconque des revendications précédentes, **caractérisée en ce que** la membrane (30) présente sur toute la surface les revêtements (12, 13) catalytiques.

6. Procédé servant à fabriquer une membrane (30) pour une unité membrane-électrode (15) selon l'une quelconque des revendications précédentes, comprenant les étapes suivantes dans l'ordre indiqué :
- mise à disposition d'une membrane sans fin (39), dans lequel les bords de la membrane sans fin (39) réalisent des côtés longitudinaux de la membrane (30),
- confection de la membrane sans fin (39) par deux coupes droites, comprenant
a.) une première coupe, qui est réalisée selon un premier angle (a) par rapport au sens d'extension et réalise un premier bord de coupe (34), et
b.) une seconde coupe, qui est réalisée selon un second angle (β) par rapport au sens d'extension et réalise un second bord de coupe (35),
dans lequel le premier angle α et/ou le second angle β sont différents de 90°, et
- dans lequel la membrane (30) est revêtue avant ou après la confection sur toute la surface d'un matériau catalyseur.

7. Procédé selon la revendication 6, **caractérisé en ce que** la confection de la membrane sans fin (39) est répétée pour fabriquer d'autres membranes (30), dans lequel respectivement n+1 membranes sont réalisées avec une réalisation au nombre de n des deux coupes.

8. Procédé selon l'une quelconque des revendications 6 ou 7, **caractérisé en ce que** le premier angle (α) et le second angle (β) sont différents l'un de l'autre.

9. Procédé selon la revendication 8, **caractérisé en ce que** le premier et le second bord de coupe réalisent les côtés courts de la membrane et une membrane (38) développée entre la seconde coupe (35) et la première coupe (34) est tournée de 180° avant un traitement ultérieur, dans lequel l'axe de rotation dans un plan de membrane est disposé de manière perpendiculaire par rapport à la surface de la membrane (38).
